# EUROPEAN PATENT APPLICATION

(11) **EP 2 442 011 A1**
(43) Date of publication of application: **18.04.2012**
(21) Application number: 09845592.6
(22) Date of filing: 17.07.2009
(51) Int. Cl.: F21S 8/00

(54) **LIGHT FITTING FOR THE EXTERIOR ENVIRONMENT AND PUBLIC HIGHWAYS WITH LEDS AS LIGHTING ELEMENT**

(30) Priority: 05.06.2009 MX 2009006022
(71) Applicant: Villafranca Quinto, Alfredo, C.P. 01420, México D.F. (MX)
(72) Inventor: Villafranca Quinto, Alfredo, C.P. 01420, México D.F. (MX)
(74) Representative: PROPI, S.L.
(86) International application number: PCT/MX2009/000075
(87) International publication number: WO 2010/140875

(57) **Abstract**

The present invention is related to the industry of manufacturing outdoor lamps and, in particular, with the manufacture of lamps with the capacity of illuminating public avenues through the conjunction of Light-Emitting Diodes (LED's) as illumination elements. The advantage of the present invention with respect to those in the state of the art consists that the lamp of the invention is small and lightweight; which allows a saving in the consumption of energy with an adequate dissipation of the heat produced by the LED's with only the aluminium plate, that does not pick up parasitic signals nor radiates any signal and which has a power factor as close as possible to 1. Structurally, it is **characterized by** comprising one composite plaque in which the led's are fixed; said composite plaque comprises, in the upper part, an aluminium plate, that in its under face has a dielectric film stuck, which electrically isolates said plaque from the following layer which consists in the copper tracks useful to electrically connect the led's in serial to the source of power; underneath the layer formed by tracks, another dielectric film is found.

## Description

### FIELD OF THE INVENTION

The present invention is related to the industry of manufacturing outdoor lamps with the illumination capacity of street lamps and, in particular, with the manufacture of lamps with the capacity of illuminating public avenues through the conjunction of Light-Emitting Diodes (LED's).

### THE RELATED ARTS OF THE INVENTION

In the state of the art, there are lamps which illuminate streets, buildings, stores, warehouses, parking lots, pedestrian bridges, parks, but they use incandescent lamps, steam bulbs.

There even exist LED lamps, but these are too heavy and, to avoid the heating of the lamp and manage to obtain the adequate illumination intensity, such lamps increase their dimensions in a considerable manner in order to provide sufficient space between each LED.

Precisely, to achieve the heat dissipation, some lamps have the so-called "heat sink", but this makes them too heavy.

Then, a lightweight and small lamp would have a competitive advantage with respect to the lamps in the state of the art, apart from looking forward to hold a competitive illumination capacity.

The lamp can save the consumption of energy but provide light intensity in the same range as other lamps. This lowers the consumption of fossil energy and saves money to the user in a long term. The LED's also have a lifespan between 10 and 15 years depending on the amount of hours used. The source can fail after five years but, with a simple maintenance, the lamp keeps functioning equally as before. The LED's are very sturdy.

Returning to the thermal aspect of the lamps in the state of the art, it is known that each LED has to dissipate the heat that it produces and if these LED's are found very close to each other, they can be affected in their functioning. It is recommended to use a squared inch of plate for each LED.

We can then mention that many of the lamps in the state of the art with an equivalent power or light outflow have an excessive weight of up to three times more.

The use of LED's makes lamps with higher lifespan and with much less consumption of electric energy and with a lower heat production as well.

### OBJECTIVES OF THE INVENTION

One of the objectives of the invention herein is to achieve a small and lightweight lamp.

Another of the objectives of the invention is to achieve a lamp that allows a saving in the consumption of energy in compare with other lamps of equal power or equal light production.

Yet, another objective is to achieve the adequate dissipation of the heat produced by the LEDs with a single aluminium plate.

Another objective is to count with a lamp that does not pick up parasitic signals nor radiates any other signal and which has a power factor as close as possible to 1.

And other objectives which will be made apparent with the detailed specification accompanied by the drawings, which were included in the present description, with illustrative character but not limited to them.

### BRIEF DESCRIPTION OF THE INVENTION

In a few words, the invention herein lies in an organizational structure of LEDs which makes that the lamps that reproduce said structure and organization are more light weighted and smaller than those of the state of the art and with a competitive lighting.

To achieve these features of the lamps, problems were faced in regard to the management of the heat triggered by the led's, as well as problems of harmonics, either the generated ones and the ones that could be picked up by the formation of an aerial by the tracks of the led's, if this aspect of the design had not been cared for.

For the aforementioned, the lamp of the present invention uses a multilayer plate. The upper layer is an aluminium plate. Underneath this plate, a dielectric plate is found to electrically insulate this aluminium plate in it's under side. Although this dielectric is an insulator of electricity, the heat is sufficiently transmitted.

The electricity feeding tracks of the led's are found above the upper dielectric, which are copper plates with a lay out of the connections that avoid that said tracks are transformed in an aerial, avoiding that it radiates and also avoiding the pick up of other radiations.

Above the tracks, another dielectric layer is found, in those zones in which the terminals of the led's to the tracks are not connected and wherein the cushion located between the electric terminals of the led's will dissipate the heat triggered by these led's.

On the other hand, the distribution of the tracks to connect the led's in a precise order and without the need of crossings is also matter of the present invention and this distribution is the one that allows complying with the neutralization of the aerial effect on the copper tracks.

Making a numbering of the led's in the plate, commencing for the upper row from left to right and following with the immediately inferior row until all the rows are finished.

This distribution was the result of multiple experiences, since there is not a rule that indicates to us how to neutralize the aerial effect with the distribution of the led's.

In the case of the present invention, in the embodiment in which 36 led's are used, these are distributed forming three upper rows of 6 led's each. Afterwards, an inferior row of 5 led's follows, right away, downwards two rows of 4 led's each are formed, to end up with other two rows, one of 3 and the most inferior, of 2 led's.

The order of connection is DS9, DS20, DS21, DS22, DS23, DS24, DS25, DS36, DS35, DS34, DS33, DS32, DS31, DS25, DS26, DS27, DS28, DS29, DS30, DS13, DS14, DS15, DS9, DS8, DS7, DS1, DS2, DS3, DS4, DS5, DS6, DS12, DS11, DS10, DS16, DS17, DS18.

All this without track crossings, all the led's in serial and the track which emerges from the connector to connect led 9, travels down, until reaching above the last row of led's, afterwards, in the left direction until surpassing the left end of the last row and continue in a parallel manner to the boards of the led's in the left side until getting to the led 9.

Even though this may not be necessary, the led's in each row are equidistant and the rows are also equidistant.

In the embodiment of an 18 led lamp, they are formed in the same number of rows, but the highest is only conformed by 2 rows, the following row downwards is conformed by four and to make the position of each led more precise, herein below we show their coordinates in chart 1. On the left side of the number of the led is the number of the led which in the former embodiment occupied this position.

### CHART 1 Coordinates of the led's in the plate

| **LED** | **Position X.(mm)** | **Position Y.(mm)** |
|---|---|---|
| 2(DS14) | 252.024 | 458.99928 |
| 5(DS13) | 387.024 | 458.99928 |
| 7(DS15) | 207.024 | 413.99928 |
| 9(DS8) | 297.024 | 413.99928 |
| 10(DS9) | 342.024 | 413.99928 |
| 12(DS1) | 432.024 | 413.99928 |
| 14(DS16) | 252.024 | 368.99928 |
| 17(DS2) | 387.024 | 368.99928 |
| 19(DS17) | 229.524 | 323.99928 |
| 21(DS7) | 319.524 | 323.99928 |
| 23(DS3) | 409.524 | 323.99928 |
| 24(DS18) | 252.024 | 278.99928 |
| 27(DS4) | 387.024 | 278.99928 |
| 29(DS10) | 297.024 | 233.99928 |
| 30(DS5) | 342.024 | 233.99928 |
| 33(DS11) | 319.524 | 188.99928 |
| 35(DS12) | 297.024 | 143.99928 |
| 36(DS6) | 342.024 | 143.99928 |

The order of connection in this embodiment is the following:
DS13, DS14, DS15, DS9, DS8, DS7, DS1, DS2, DS3, DS4, DS5, DS6, DS12, DS11, DS10, DS16, DS17, DS18.

For better understanding of the features of the invention, to the description herein is accompanied, as integrating part of the same but not limited to them, the drawings that, with illustrative character, are herein below described.

### BRIEF DESCRIPTION OF THE FIGURES

Figure 1 schematizes a cross section of the plate wherein the led's are connected, showing their layers.
Figure 2 schematizes the way in which the led's are electrically connected in the copper tracks and how the heat is spread to the aluminium plate.
Figure 3 illustrates the connections and placing of the led's in the plate in the embodiment of 36 led's.
Figure 4 illustrates the connections and placing of the led's in the plate in the embodiment of 18 led's.

For a better understanding of the invention, a detailed description of some of its embodiments is made, shown on the drawings that, with illustrative purposes but not limited to them, are annexed to the description herein.

### DETAILED DESCRIPTION OF THE INVENTION

For the achievement of the objectives raised in the present invention, it was fundamentally required to use a structure that allowed spreading to the environment the heat triggered by the led's and a distribution and connection of such led's to avoid the aerial effect of the copper tracks for the connection of the led's in serial.

In addition to the aerial effect resolved with the distribution and way of connection of the led's, the metal plate of the lamp was also touched down with a "wire braid" cable and a feeding cable with noise protection was used. A ferrite in the feeding cable was also necessary.

To manufacture the lamp, it was necessary to use an O-Ring, which was used to settle around the casing. When the lamp is closed, said O-Ring acts as a seal. The MCPCB is sealed with a special glue that places the aluminium permanently with the polycarbonate plus applying a silicon cord in the event there was possibility of fugues.

The lamp has transparent polycarbonate to allow the light to come out. It has a loss of 12 per cent but, it is lightweight, flexible, not-easily broken and can survive to strong impacts.

The led's are placed sufficiently near, to allow that the light which comes out at 80 degrees over the vertical, collides with the casing and is reflected.

Each LED carries a protection, if a LED fails, a component in parallel makes a "bypass". This avoids a catastrophic failure, in order for the lamp not to shut down immediately.

The heat elimination is achieved in the present invention, through the "Metal Core Printed Circuit Board" (MCPCB). This plate is made for different LED's. The LED's are the Load of the source. Many of them carry the same electrical features. If the design voltage is around 3.2V (Vf) and the consumption 350mA, we can use it.

Plus, we have to see the optical features as the light exit angle to have better quantity of light coming out of the lamp. This is the lamp's feature; this allows the client to have the quantity, color, Angle, required for its use.

To achieve the dissipation of the heat, a plate design is applied in the lamp to which the led's will be electrically and mechanically joined.

This plate is named "Metal Core Printed Circuit Board" (MCPCB).

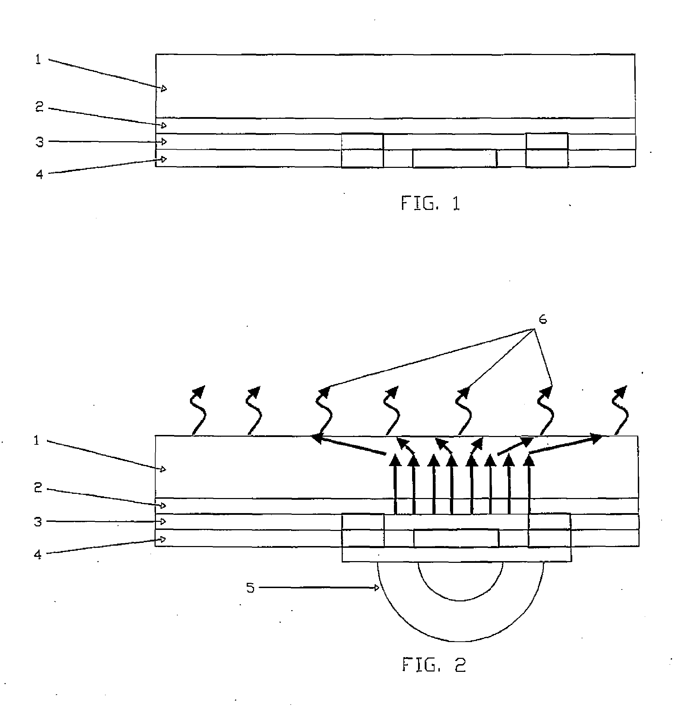

Figure 1 schematizes a cross section of the plate where the led's are connected, showing their layers. The aluminium plate where the other plates are fixed is pointed out as number 1. The dielectric layer that, although isolates electrically, allows in a good manner the passing of the heat to reach the aluminium plate, is pointed out as number 2.

Underneath of this dielectric layer, the copper tracks 3 are placed for the electrical connection of the led's. Above of the copper tracks, another White dielectric layer 4 is placed.

Figure 2 schematizes the form in which the led's are electrically connected in the copper tracks and how the heat is spread to the aluminium plate. In this figure, apart from the elements already mentioned in the description of figure 1, the led 5 and the schematic flow of the heat 6 can be appreciated.

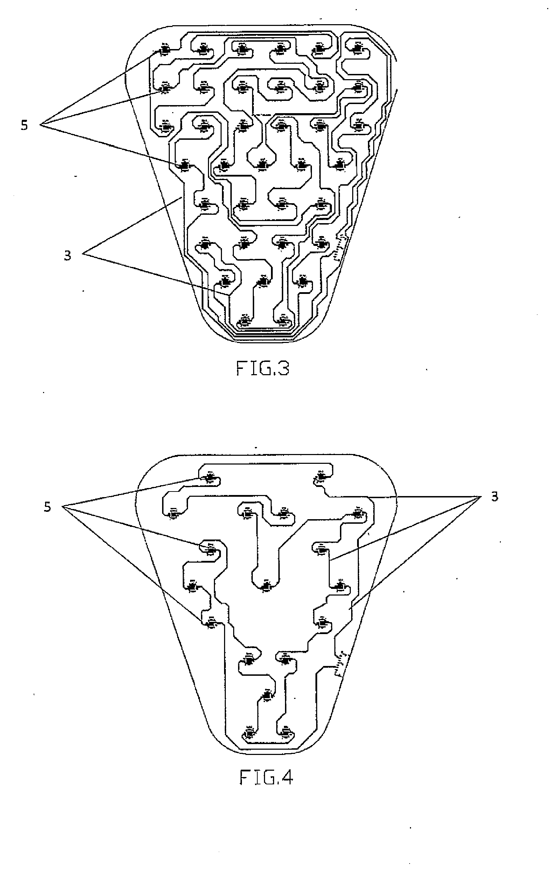

Figure 3 illustrates the connections and position of the led's 5 in the MCPCB 7 plate in the embodiment of 36 led's. The connections are carried out through the copper tracks 3.

Figure 4 illustrates the connections and position of the led's in the MCPCB plate in the embodiment of 18 led's. The same elements shown on figure 3 are shown here.

By the features of the MCPCB plate it is feasible to connect several LED types, but keeping the same organization in the connections. The modalities illustrated in figures 3 and 4 are embodied by the CREETM led's. It is also feasible to use the same plates for OSRAMTM led's. Nonetheless, for these latter, the organization would occupy a lower surface.

The invention has been sufficiently described in order for a person with medium knowledge on the subject to reproduce and obtain the results mentioned in the present invention. Nevertheless the foregoing, any skilled person in the field of the art to which the present invention refers, can be able to make modifications which are not described in the present application, nevertheless, if the subject matter claimed in the following claims is required for applying these modifications in a determined structure or the manufacture process of the same, said structures must be comprised within the scope of the invention.

Having described the invention, it is considered as a novelty and thus, it is therefore claimed as property, the following claims.

## Claims

1. Outdoor and street lamps with led's, as lightning elements, **characterized by** comprising a composite plate in which the led's are fixed; said composite plate comprises, in the upper part, an aluminium plate that, in its under side has a dielectric film, that electrically isolates said plate from the following plate consisting in the copper tracks useful to electrically connect the led's in serial to the source of power; underneath of the plate formed by the tracks, another dielectric film is found.

2. Outdoor and street lamps with led's as lightning elements, as claimed in the above claim, also **characterized** because the composite plate is part of the casing, remaining the upper side of the aluminium sheet exposed to weathering process, by forming the upper part of said casing.

3. Outdoor and street lamps with led's, as lightning elements, as claimed in the claims 1 or 2, besides **characterized** because in parallel to each led, an electrical circuit is comprised that places the led in cut when it stops functioning.

4. Outdoor and street lamps with led's, as lightning elements, as claimed in any of the claims 1 to 3, besides **characterized** because the lamp comprises 18 led's which are connected in the following order: DS13, DS14, DS15, DS9, DS8, DS7, DS1, DS2, DS3, DS4, DS5, DS6, DS12, DS11, DS10, DS16, DS17, DS18, with the led's numbered from left to right and from top to bottom and without crossings in the connection tracks,

5. Outdoor and street lamps with led's, as lightning elements, as claimed in any of the claims 1 to 3, besides **characterized** because the lamp comprises 36 led's connected in serial in the following order: DS9, DS20, DS21, DS22, DS23, DS24, DS25, DS36, DS35, DS34, DS33, DS32, DS31, DS25, DS26, DS27, DS28, DS29, DS30, DS13, DS14, DS15, DS9, DS8, DS7, DS1, DS2, DS3, DS4, DS5, DS6, DS12, DS11, DS10, DS16, DS17, DS18 with the led's numbered from left to right and from top to bottom, and without crossings in the connection tracks.

## Amended claims

### Amended claims under Art. 19.1 PCT

Having described the invention, it is considered as a novelty and thus, it is therefore claimed as property, the following claims.
Outdoor Lamp with LED's, comprising a composite plate with an aluminium plate in the upper part that, in its under side has a dielectric film that electrically isolates said plate from the following plate consisting in the copper tracks useful to electrically connect the LED'S and underneath of the plate formed by the tracks, another dielectric film is found ***characterized*** because the plate of copper tracks connects the LED's in serial to the power source and in parallel to each LED, an electric circuit is included in each LED that places the LED in cut when it stops functioning.
The lamp as claimed in claim 1, ***characterized*** because the plate of tracks is built without crossings in the connection tracks.
The lamp as claimed in claim 2, ***characterized by*** comprising 18 led's which are connected in serial to each other in the following order: DS13, DS14, DS15, DS9, DS8, DS7, DS1, DS2, DS3, DS4, DS5, DS6, DS12, DS11, DS10, DS16, DS17, DS18, with the led's numbered from left to right and from top to bottom.
The lamp as claimed in claim 2, ***characterized by*** comprising 36 led's connected in serial to each other in the following order: DS9, DS20, DS21, DS22, DS23, DS24, DS25, DS36, DS35, DS34, DS33, DS32, DS31, DS25, DS26, DS27, DS28, DS29, DS30, DS13, DS14, DS15, DS9, DS8, DS7. DS1, DS2, DS3, DS4, DS5, DS6, DS12, DS11, DS10, DS16, DS17, DS18, with the led's numbered from left to right and from top to bottom.
The lamp as claimed in claims 3 or 4, ***characterized by*** comprising a metal plate which was touched down with a wire braid cable and the feeding cable is a cable with noise protection and includes a ferrite in such feeding cable.
The lamp as claimed in claim 5, ***characterized by*** comprising various types of LED's in the same composite plate.
